# EUROPEAN PATENT APPLICATION

(11) **EP 2 434 152 A2**
(43) Date of publication of application: **28.03.2012**
(21) Application number: 11183052.7
(22) Date of filing: 28.09.2011
(51) Int. Cl.: F03D 11/00, B29C 65/78

(54) **Installation for assembling composite material structures**

(30) Priority: 28.09.2010 ES 201001243
(71) Applicant: Torres Martinez, Manuel, 31007 Pamplona (Navarra) (ES)
(72) Inventor: Torres Martinez, Manuel, 31007 Pamplona (Navarra) (ES)
(74) Representative: Intès, Didier Gérard André

(57) **Abstract**

The present invention relates to an installation for assembling composite material structures comprising positioning tools (2, 3, 4, 5) which handle and assemble the different component parts of a wind turbine or aerodyne blade (1), upper surface sheet (1.1), lower surface sheet (1.2), leading edge (1.3), and beams (1.4), as well as transporting tools (6, 7, 8, 9) which together with reference means (10) allow placing with precision the different component parts of the blade (1) in the installation.

## Description

### Sector of the Technique

The present invention relates with the manufacturing and assembly of composite material structures, such as wind turbine or aerodyne blades, more specifically the invention refers to an installation to automate the process of assembling the different component parts forming the blades.

### State of the Art

The worldwide demand of renewable energies to deal with climate change involves, in a very significant manner, wind energy, which is mainly developed by means of wind turbines with blade rotor. The development of said wind turbines and their application to produce energy by means of harnessing the wind increasingly requires more efficient wind turbines of greater nominal capacity and lower cost per Kilowatt of energy generated.

Among other aspects, the sweeping surface of the blades of the rotor which receives the action of the wind is essential in the generation of energy by means of such wind turbines, such that one of the means to increase the power of energy generation is increasing the size of the blades.

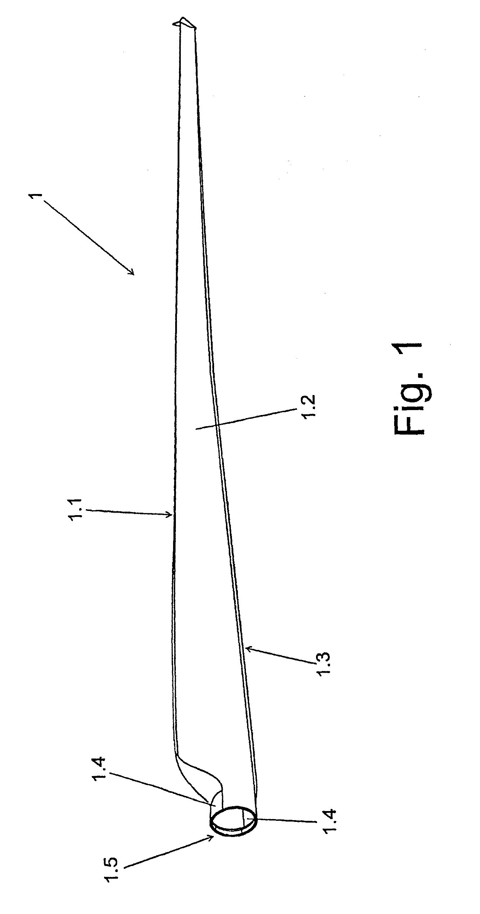

An example of configuration of said blades is disclosed in Figure 1.A of patent ES200802276, Figure 1 of patent ES200800641 and patent ES200900127, wherein the blade comprises two outer side sheets arranged on an inner structure formed by beams by way of longitudinal partitions, such that the outer side sheets determine the aerodynamic profile of the blade, together with a complementary section defining the leading edge. Both the outer side sheets and the beams of the inner structure determine prolongations, by means of which a cylindrical section making up the root of the blade is formed for securing on the rotating rotor of the wind turbine.

Although these blades tend to be divided into longitudinal sections, their large size entails a series of problems, in terms of the difficulties which arise for handling with precision the different component parts of the blades during their assembly, this fact being substantially worsened in the construction of large blades (between 50 and 90 meters in length), such as for example for wind turbines of 3 to 10 MW of nominal capacity.

In this sense, the processes for manufacturing and assembling the component parts of the wind turbine blades are manual-labor intensive processes with the consequential added problems of cost and low quality due to the lack of precision and the inaccuracy in the repetitive operations of said manual processes.

It is therefore necessary to provide an installation for an automated, repetitive manufacturing with a higher productivity of composite material structures, such as wind turbine or aerodyne blades, allowing a precise handling of the different component parts of the blade to assemble the same with high accuracy.

### Object of the Invention

The present invention proposes an installation to perform the process of assembling composite material structures in an automated, precise and efficient manner. The installation object of the invention is preferably applied in the aeronautic and wind sector for manufacturing wind turbine or aerodyne blades, however, this application is not limiting, being able to be used in other industrial sectors such as the naval sector, civil construction sector, other renewable energy sectors, etc, wherein large composite material structures are handled.

The installation for assembling composite material structures object of the invention is made up of positioning tools which allow handling and assembling with precision the different component parts of a wind turbine blade or other similar structure, and transporting tools for transporting said component parts of the wind turbine blade which acting together with reference means located at ground level allow placing said transporting tools accurately in the installation, such that the positioning tools can correctly receive with high precision the component parts of the blade and thus a high quality assembling of the wind turbine or aerodyne blade is achieved.

The installation for assembling composite material structures is therefore made up of four positioning tools and four transporting tools:
- A positioning tool for positioning upper surface sheets,
- A positioning tool for positioning lower surface sheets,
- A positioning tool for positioning leading edges,
- A positioning tool for positioning beams,
- A transporting tool for transporting upper surface sheets,
- A transporting tool for transporting lower surface sheets,
- A transporting tool for transporting leading edges,
- A transporting tool for transporting beams.

The positioning tools of the upper and lower surface sheets are made up of turrets susceptible to transversal displacement which are driven by means of a nut-screw mechanism and slide on respective skids, there being coupled selectively to the turrets curved elements having the shape of the corresponding sheet to be handled and having respective retention means to secure said sheets.

The positioning tool of the leading edge has a mechanism susceptible to vertical displacement there having selectively coupled a curved element with the shape of the corresponding leading edge to be handled, and wherein said curved element is provided with retention means by way of suction cups or the like to secure the leading edge of the blade. The different curved elements which the positioning tools have are susceptible of being exchanged to provide greater versatility to the installation, such that sheets and leading edges of different shapes can be handled to obtain wind turbine or aerodyne blades of different configurations and sizes.

The positioning tool of the beams consists of rotating articulated arms which are assembled in the positioning tool of the leading edge itself and which at the ends thereof there are arranged retention means to secure the beams. Although, as an embodiment, it is shown that the positioning tools of the leading edge and the beams form a single element, they could be formed by individual elements without it altering the concept of the invention.

The transporting tools are truss and light structures having anchoring means for stabilizing them in retention with respect to the reference means of the installation and they also have retention means to secure the different component parts of the wind turbine or aerodyne blade during the transportation thereof. The retention means of the installation are fundamentally based on suction systems, clamping systems, or a combination of both, however they can be any securing means which do not damage the composite material of the blade.

Thus an installation for assembling composite material structures which is very advantageous due to its constructive and functional characteristics, acquiring own identity and preferred character for said function, allowing obtaining an automated, precise and high quality assembly of component parts of wind turbine or aerodyne blades, is obtained.

### Description of the Drawings

Figure 1 shows a perspective and schematic view of a blade of a wind turbine.
Figure 2 is an exploded perspective view of the different component parts of the wind turbine blade depicted in Figure 1
Figure 3 shows a transverse section according to non-limiting practical embodiment of a blade of a wind turbine.

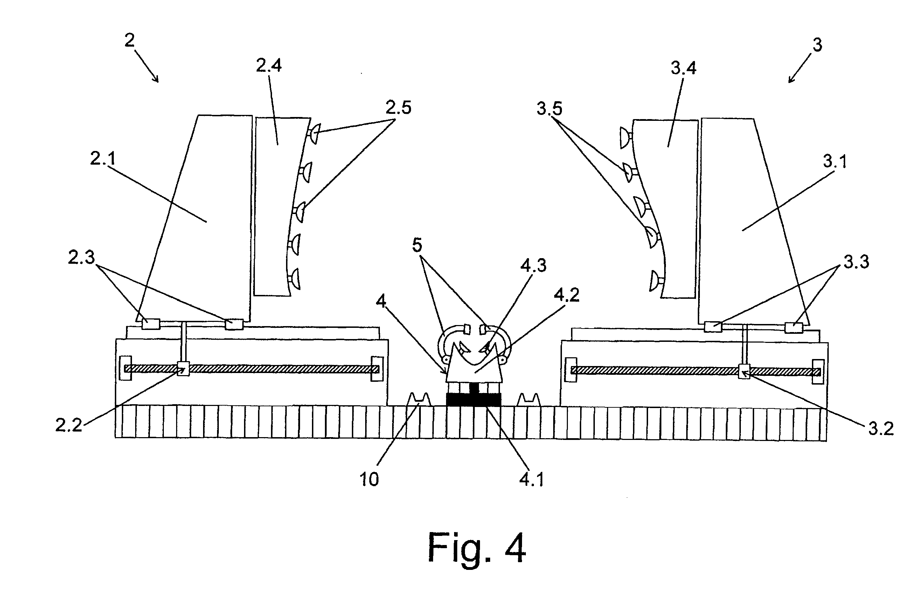

Figure 4 shows a schematic view of the installation for assembling composite material structures object of the invention.
Figures 5, 6, and 7 show the sequence for loading the upper surface sheet of a blade in the installation.
Figure 8 shows a schematic view of the installation in the phase for loading the lower surface sheet of the blade to be assembled.
Figures 9, 10, and 11 show the sequence for loading the leading edge of the blade in the installation.

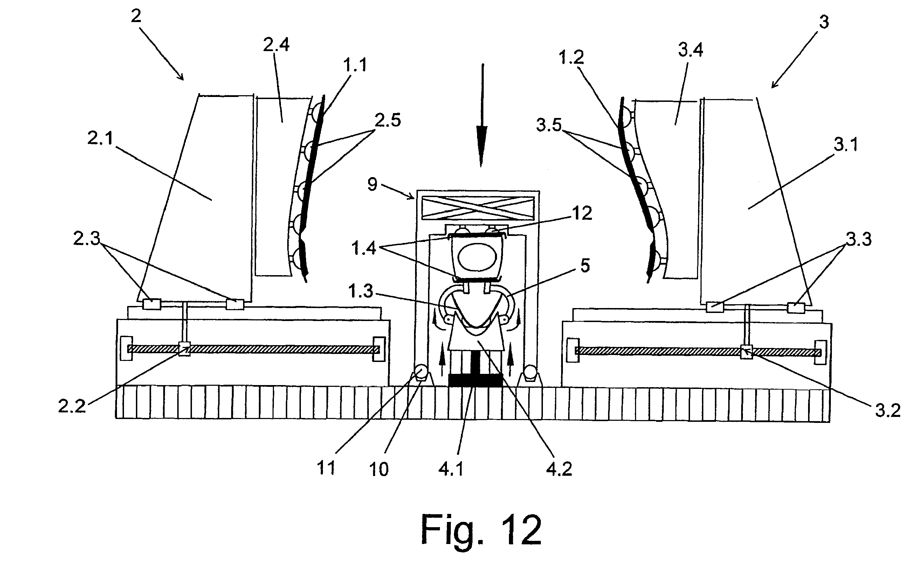

Figure 12 shows a schematic view of the installation in the phase for loading the component part of the wind turbine blade corresponding to the beams.
Figure 13 is a schematic perspective view of the installation for assembling composite material structures, wherein the application of adhesive on the different component parts of the blade for the subsequent assembly thereof is shown.
Figure 14 shows a schematic view of two positioning tools assembling the upper and lower surface sheets with one another and on the beams.
Figures 15, 16 and 17 show the sequence for assembling the leading edge with the upper surface sheets, lower surface sheets and the beams to form the set of the wind turbine blade.

### Detailed Description of the Invention

The present invention refers to an installation for referencing, assembling and joining components of composite material structures such as component parts of wind turbine or aerodyne blades.

Figure 1 depicts, according to a possible non-limiting practical embodiment, a wind turbine blade (1) as a possible non-limiting example of aerodyne or wind turbine components.

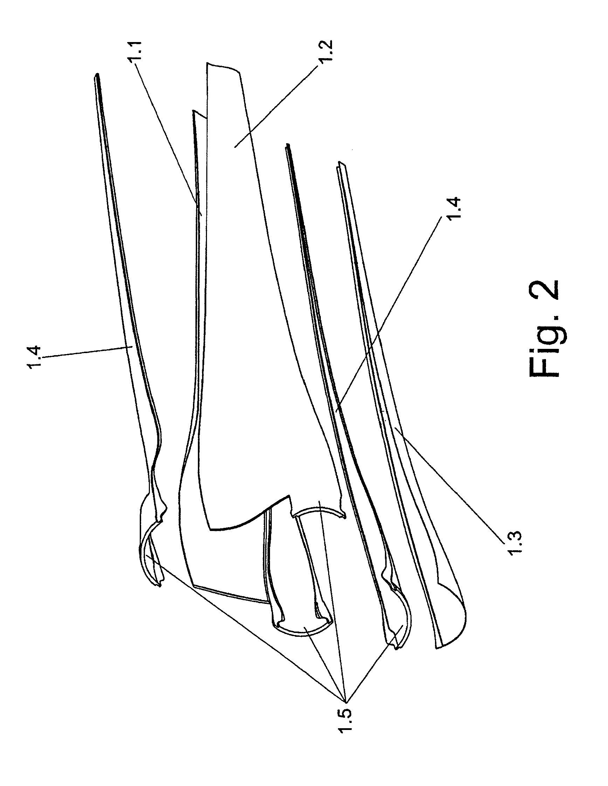

There are different methods and ways for manufacturing these blades on which the applicant has many patents. According to the example depicted in Figures 1 and 2, the blade (1) has an exterior aerodynamic profile made up of a sheet (1.1) known as upper surface, another sheet (1.2), known as lower surface, which in the lower part thereof are closed by a complementary section known as leading edge (1.3) and end in the upper part thereof forming the so-called trailing edge.

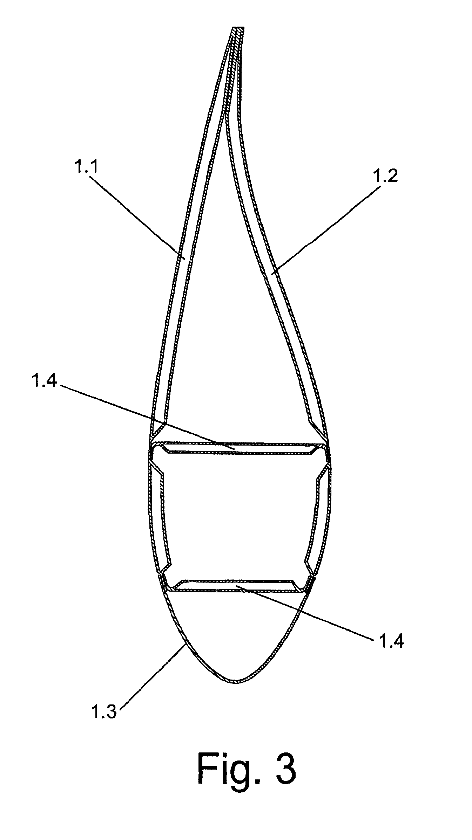

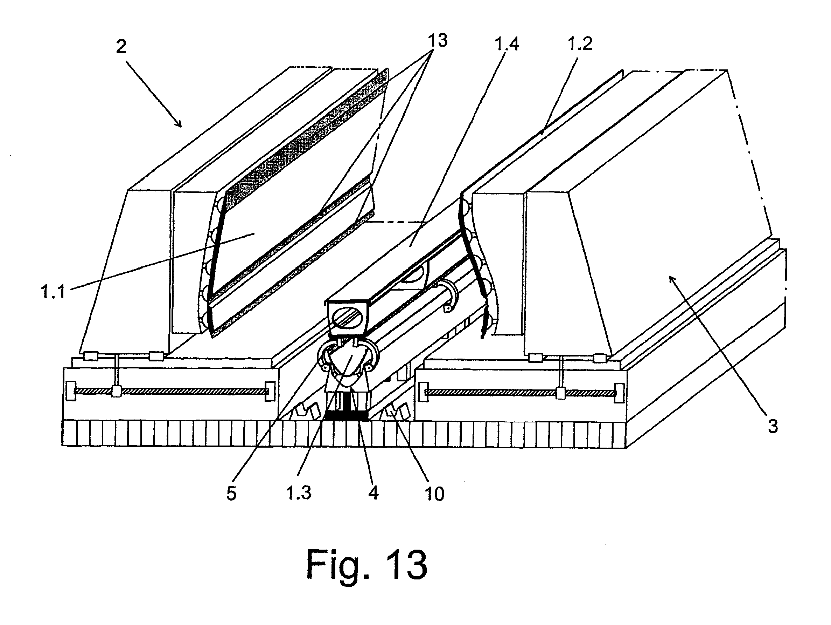

As can be observed in the cross-sectional view of Figure 3, the blade (1) has between the upper surface sheet (1.1) and the lower surface sheet (1.2) an inner structure formed by beams (1.4) by way of longitudinal partitions with a "U"-shaped configuration. To confer rigidity to this inner structure, the beams (1.4) are joined through its inner faces by means of a series of transverse frames, such as can be observed in Figure 13.

The upper and lower surface sheets (1.1, 1.2) and the beams (1.4) of the inner structure of the blade (1) respectively have prolongations at the end corresponding to the base of the blade (1), by means of which a cylindrical section making up the root (1.5) of the blade (1) is formed for joining on a bearing of the rotating rotor (pitch) of the wind turbine of application.

Although the installation object of the invention will be described for assembling the different component parts of a wind turbine blade (1) with the aforementioned structure, it can also be applied to other types of wind turbine or aerodyne blades, or even to other composite material structures which due to their dimensions are hard to handle and therefore their assembly into set cannot be made with precision by means of conventional joining techniques.

The installation for assembling composite material structures object of the invention is made up of positioning tools (2,3,4,5) which allow handling and assembling the different component parts of the blade (1) to be assembled, transporting tools (6, 7, 8, 9) for transporting said component parts of the blade (1), as well as reference means (10) which allow accurately placing the transporting tools (6, 7, 8, 9) with respect to the positioning tools (2, 3, 4, 5) of the installation, to thus enable achieving a high accuracy in assembling the different component parts of the blade (1).

As can be observed in the attached drawings, the installation is made up of:
- a positioning tool (2) for positioning the upper surface sheet (1.1),
- a positioning tool (3) for positioning the lower surface sheet (1.2),
- a positioning tool (4) for positioning the leading edge (1.3),
- a positioning tool (5) for positioning the beams (1.4),
- a transporting tool (6) for transporting the upper surface sheet (1.1),
- a transporting tool (7) for transporting the lower surface sheet (1.2),
- a transporting tool (8) for transporting the leading edge (1.3),
- a transporting tool (9) for transporting the beams (1.4) ;

The positioning tools (2, 3) for positioning the upper and lower surface sheets (1.1, 1.2) are formed by respective turrets (2.1, 3.1) having a transversal displacement movement to receive and position the sheets (1.1, 1.2) which the transporting tools (6, 7) carry. Both turrets (2.1, 3.1) are driven by means of a nut-screw mechanism (2.2, 3.2) and are guided by means of respective skids (2.3, 3.3). The type of operation of the towers (2.1, 3.1) is in no case limiting, any other type of operation such as electric, hydraulic, pneumatic, magnetic operations, or operations of any other nature, being able to be applied.

It has been provided that, secured to the turrets (2.1, 3.1) there are arranged respectively curved elements (2.4, 3.4), which are susceptible to be selectively exchanged for others to provide versatility to the installation and the latter can be adapted to the assembly of blades (1) of different sizes with sheets (1.1, 1.2) of different configurations. Likewise, the turrets (2.1, 3.1) in the outer area of the curved elements (2.4, 3.4) have retention means (2.5, 3.5) for securing to the sheets (1.1, 1.2). In the attached drawings the retention means (2.5, 3.5) consist of suction-based means such as suction cups, although they could be clamping means or combination of clamping and suction, any other retention means being able to be applied, provided that the composite material forming the parts of the blade (1) to be assembled is not damaged.

The positioning tool (4) of the leading edge (1.3) has a mechanism (4.1) which is susceptible to be displaced vertically to receive and position the leading edge (1.3) which the transporting tool (8) carries. The mechanism (4.1) can be made up of a mechanical device, such as a ball screw, a pneumatic, hydraulic, magnetic device, or known device of any other type, without this being limiting to the invention.

The mechanism (4.1) of the positioning tool (4) has coupled thereto, in its upper part a curved element (4.2) with the shape of the corresponding leading edge (1.3) to be handled, said curved element (4.2) being able to be selectively exchanged to be adapted to leading edges (1.3) of different shapes and sizes. Likewise, it has been provided that said curved element (4.2) is provided with retention means (4.3) to secure the leading edge (1.3). These retention means (4.3), similarly to the retention means (2.5, 3.5) of the positioning tools (2, 3), can be clamping means, suction means, or combination of both.

The positioning tool (5) for positioning the beams (1.4) has rotating articulated arms, which are arranged assembled on the positioning tool (4) for positioning the leading edge (1.3) and swivel between a position securing the beams (1.4) and a folded position in which they do not interfere with the rest of tools of the installation. Like the rest of positioning tools, the articulated arms of the tool (5) end in their ends with retention means (not depicted) to hold the beams (1.4) during the assembly of the blade (1), these retention means being able to be of any type mentioned above. It has been provided that said articulated arms are electrically driven. Although the articulated arms in the embodiments shown in the drawings are arranged on the positioning tool (4) for positioning the leading edge (1.3), this arrangement is not limiting, said articulated arms or other similar system being able to be arranged in other points of the installation.

On the other hand, the transporting tools (6, 7, 8, 9) for transporting the different component parts of the blade (1) are truss and light structures which are transported to the assembling installation, for example, by means of a bridge crane. The transporting tools (6, 7, 8, 9) are provided with anchoring means (11) which are established in retention with respect to the reference means (10), such that said anchoring means (11) in combination with the reference means (10) allow assuring at all times a correct referencing of the component parts of the blade (1) to be assembled and an absolute absence of mechanical interferences between the positioning tools and the transporting tools which must occupy the assembly area while loading the component parts of the blade (1) in the installation. Likewise, the transporting tools (6, 7, 8, 9) have respective retention means (12) to hold the different component parts of the blade (1) while loading in the installation, being able to be clamping means, suction means, or combination of both.

It has been provided that the reference means (10) are susceptible to being conceal towards a retracted position wherein they do not interfere during the assembly of the blade (1) to be assembled. According to a non-limiting embodiment, the reference means (10) are conical holes located at ground level, having a horizontal translation movement for being conceal under the turrets (2.1, 3.1) and a slight longitudinal translation movement to allow securing the anchoring means (11) correctly. The reference means (10) can also have a vertical translation movement for being concealed under the ground level, such that when a transporting tool enters the installation the reference means (10) come up and are located in the correct position to accurately place the corresponding transporting tool.

The loading of the transporting tools (6, 7, 8, 9) in the installation has been described by means of using a bridge crane or the like, however, it has been provided that said loading can be performed by means of longitudinal guides arranged on the ground of the installation, through where the transporting tools (6, 7, 8, 9) are displaced such that the reference means (10) were the longitudinal guides, the latter having in selective points predefined areas so that the anchoring means (11) of the transporting tools are fastened and the component part of the respective blade (1) that they transport is thus perfectly referenced.

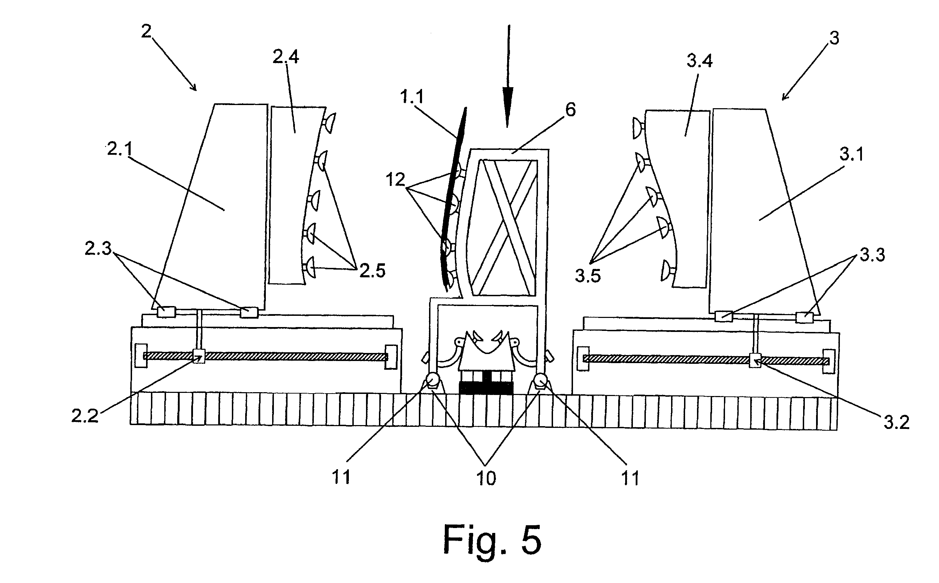

So with this, an example for assembling a wind turbine or aerodyne blade (1) will be described. As observed in Figure 5, a bridge crane (not depicted) or a similar means, places in the installation the transporting tool (6) carrying the upper surface sheet (1.1), which is secured to same by the retention means (12), either by suction means, clamping means or combination of both. The transporting tool (6) is perfectly referenced in the assembly area of the installation by means of coupling the anchoring means (11) in the reference means (10).

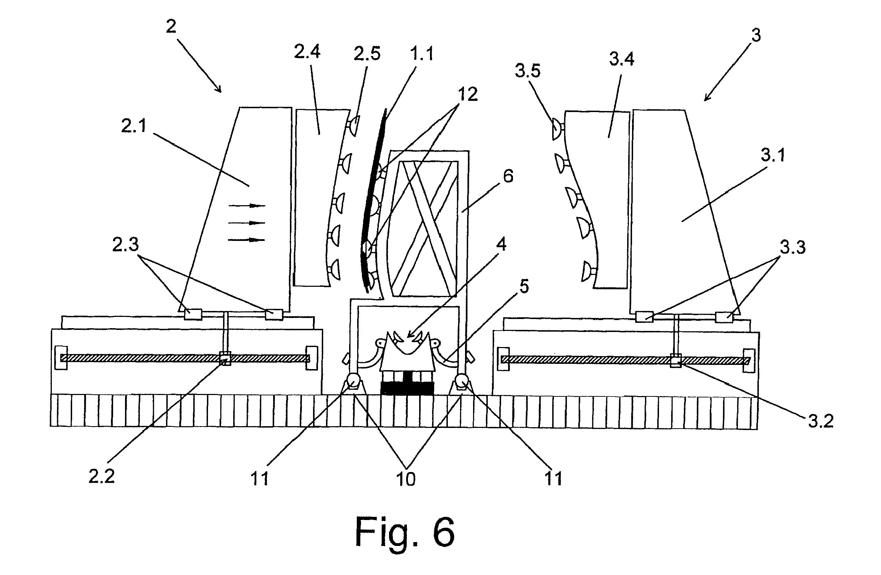

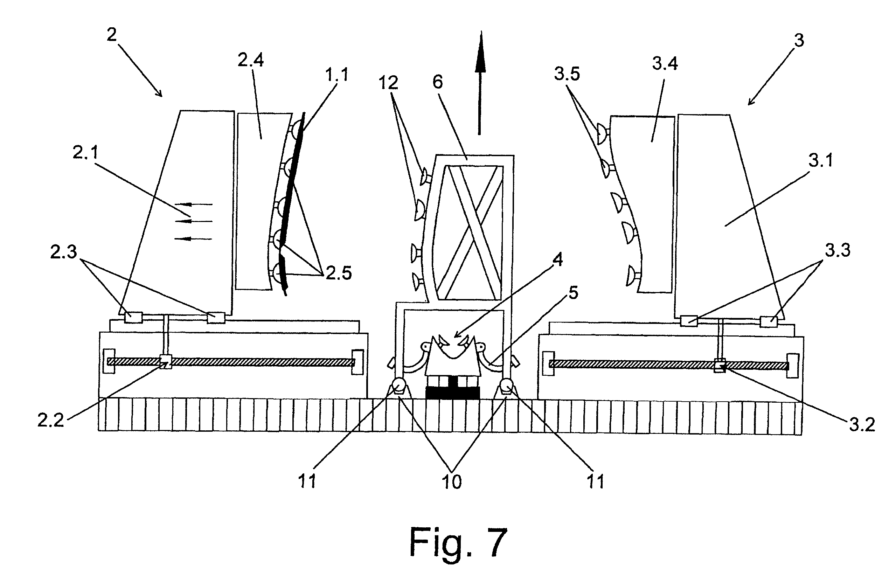

As seen in the sequence for assembling depicted in Figures 6 and 7, once the upper surface sheet (1.1) has been referenced, the turret (2.1) of the positioning tool (2) is displaced horizontally on the skids (2.3) driven by the nut-screw mechanism (2.2), until the retention means (2.5) of the curved element (2.4) contact with the outer face of the upper surface sheet (1.1), at which time the retention means (12) of the transporting tool (6) stop retaining the upper surface sheet (1.1), which will then be held by the retention means (2.5). Thus, the turret (2.1) of the positioning tool (2) is removed carrying the upper surface sheet (1.1) to an end position leaving it prepared for its subsequent assembly with the rest of the components of the blade (1), freeing-up the assembly area in the installation in this manner so that the rest of the transporting tools with their respective component parts of the blade (1) can access it. Finally the transporting tool (6) is removed by means of using the bridge crane or similar means.

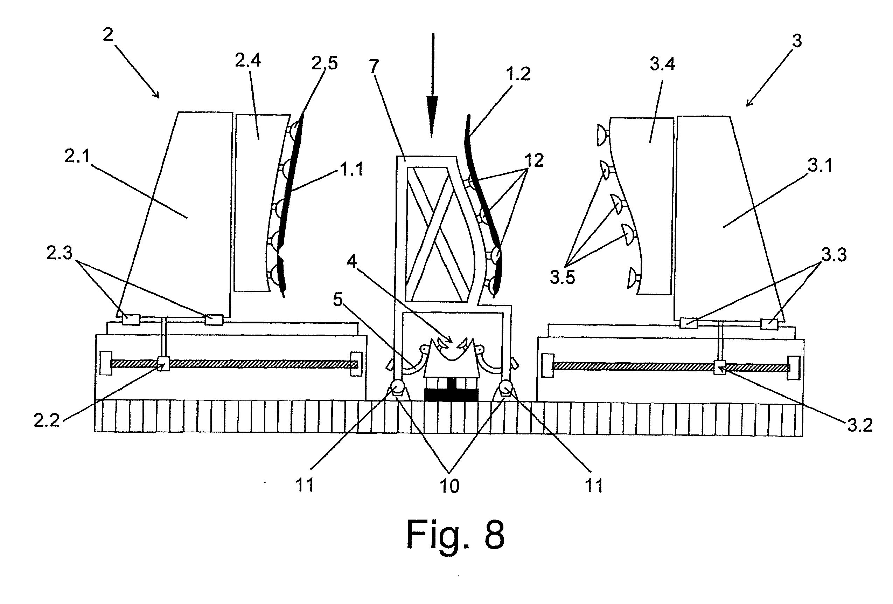

Subsequently, as seen in Figure 8, the lower surface sheet (1.2) is loaded in the installation, the process is the same as that described above for loading the upper surface sheet (1.1), for this case the transporting tool (7) and the positioning tool (3) for positioning the lower surface sheet (1.2) being used.

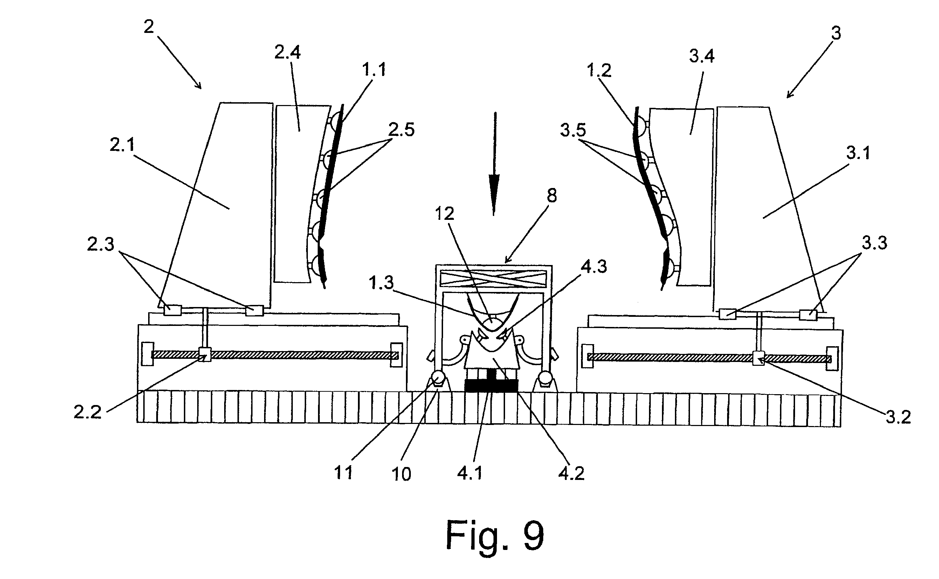

According to Figure 9, once the sheets (1.1, 1.2) have been loaded in the respective positioning tools (2, 3), the transporting tool (8) of the leading edge (1.3) is placed by means of the bridge crane or similar element, wherein similar to that for the transporting tools (6, 7) above, the transporting tool (8) is perfectly referenced in the assembly area of the installation by means of coupling the anchoring means (11) in the reference means (10).

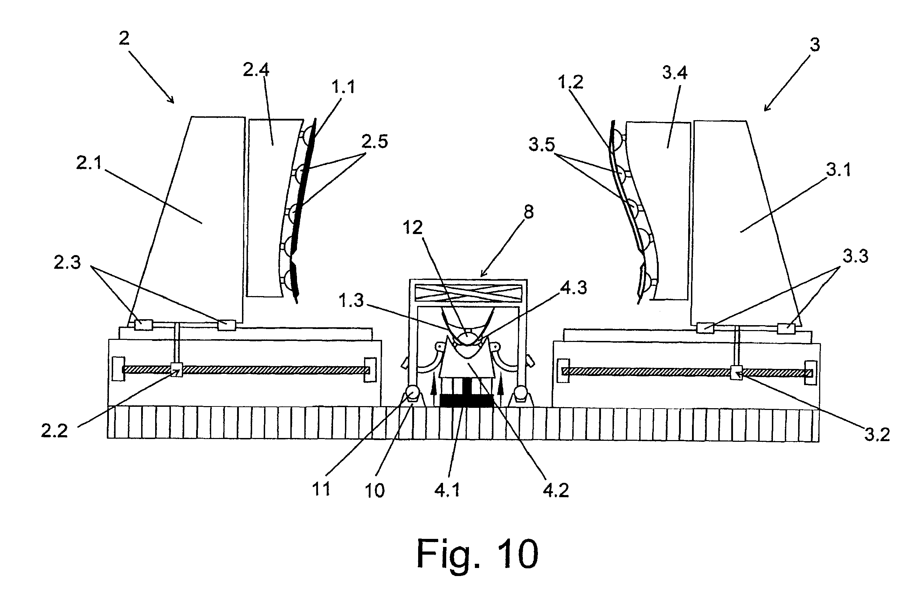

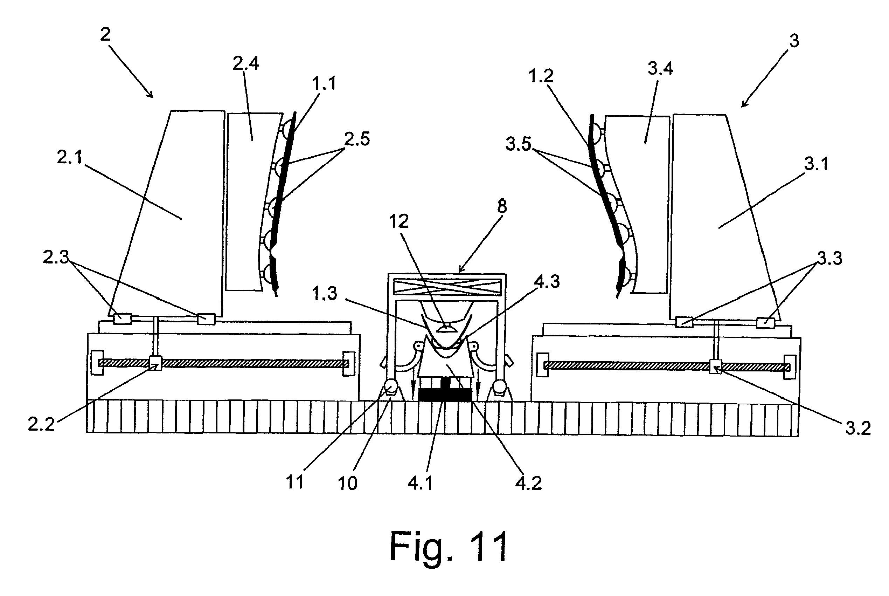

With this arrangement, as observed in Figures 10 and 11, the mechanism (4.1) of the positioning tool (4) slides vertically on its guides until the retention means (4.3) of the curved element (4.2) contact with the leading edge (1.3) which the transporting tool (8) carries. Once the fixation of the leading edge (1.3) to the retention means (4.3) of the curved element (4.2) is ensured, the fixation established between the leading edge (1.3) and the transporting tool (8) is released, in the exemplified case this is carried out by eliminating the vacuum of the retention means (12). Once the leading edge (1.3) is detached from the transporting tool (8), the mechanism (4.1) lowers vertically, thus allowing the removal of the transporting tool (8) out of the assembly area of the installation.

With the upper and lower surface sheets (1.1, 1.2) and the leading edge (1.3) loaded in the installation, the transporting tool (9) carrying the beams (1.4) is moved by means of the bridge crane or similar means, this tool (9) being referenced by the assembly of the respective anchoring means (11) in the corresponding reference means (10). In this case, to transfer the beams (1.4) which are held by the retention means (12) of the transporting tool (9), the articulated arms of the positioning tool (5) rotate and the positioning tool (4) is lifted, such that the vacuum of the retention means (12) of the tool (9) is deactivated and the beams (1.4) are held by the retention means (not depicted) of the positioning tool (5).

With all the component parts of the blade (1) loaded in the installation, a series of adhesive lines (13) is applied in the joining areas of the sections, such as observed in Figure 13. Said application of adhesive can be performed manually by the worker, or in an automated manner by means of using robotized elements. Generally, the adhesive is applied only on one of the surfaces which are to be joined.

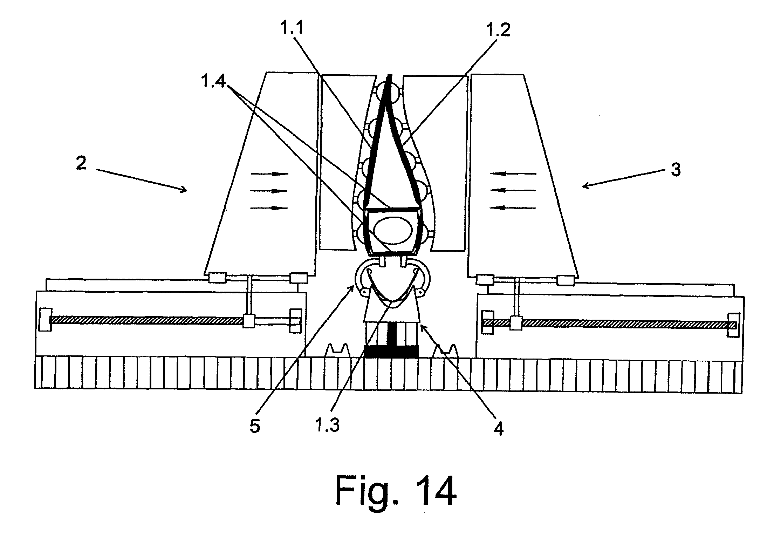

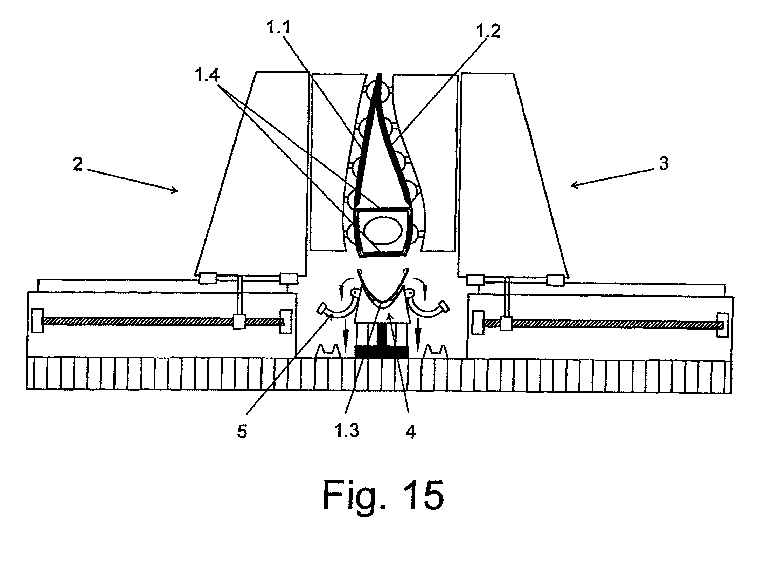

After applying the adhesive the turrets (2.1, 3.1) of the positioning tools (2, 3) are displaced until the upper and lower surface sheets (1.1, 1.2) are assembled to one another and to the beams (1.4). To assure the correct assembly of said component parts of the blade (1) pressure must be applied, this pressure can be applied by the nut-screw mechanism (2.2, 3.2) of the turrets (2.1, 3.1), or by means of an auxiliary system assuring an application of sufficient force. Said force of pressure is maintained until the curing of the adhesive of the set of the blade (1) (See Figures 14, 15 and 16).

Once the upper and lower surface sheets (1.1, 1.2) are assembled and the beams (1.4) having been housed therein, the leading edge (1.3) is assembled. To that end, first, the articulated arms of the positioning tool (5) are folded, lowering to that end the mechanism (4.1) of the positioning tool (4), and then lifts the mechanism (4.1) again until the leading edge (1.3) is assembled with the edges of the upper and lower surface sheets (1.1, 1.2). The mechanism (4.1) keeps the pressure to assure a correct assembling.

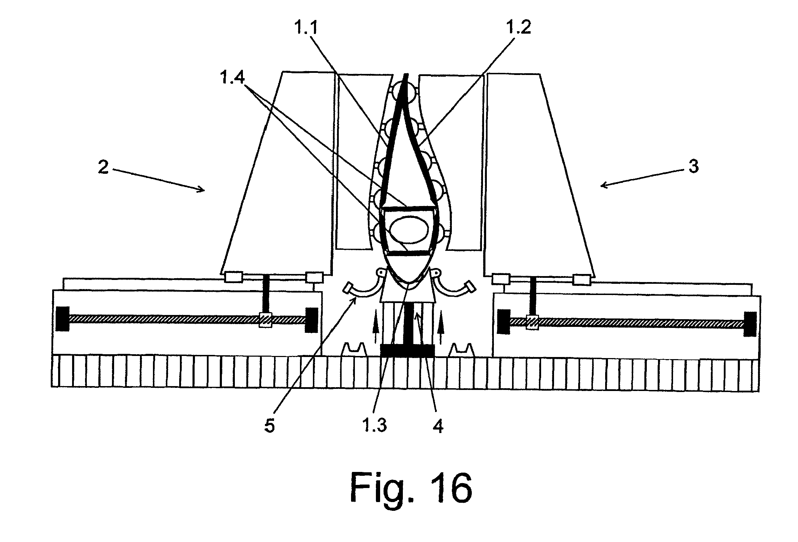

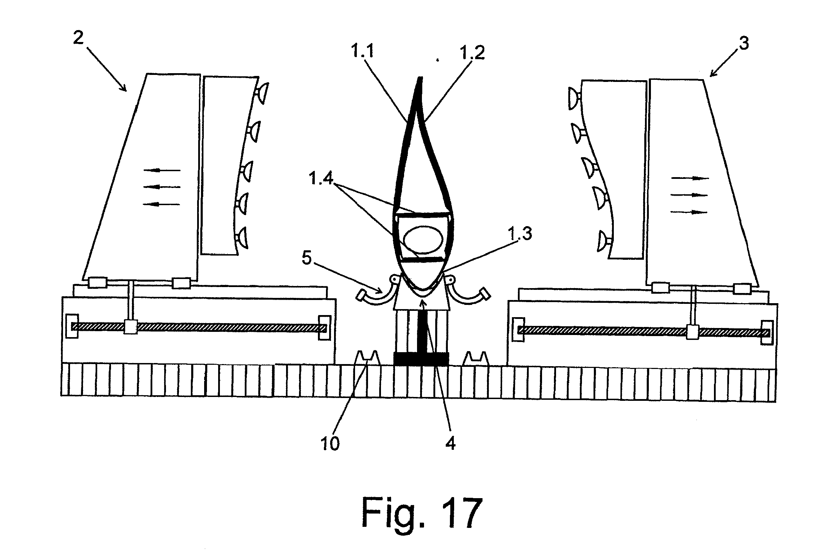

As observed in Figure 16, the positioning tools (2, 3, 4) keep exerting pressure on the different component parts of the blade (1) until the adhesive thereof is cured, and when this has been produced, the positioning tools (2, 3) are moved, the blade (1) being supported on the positioning tool (4) (see Figure 17), allowing a bridge crane or the like to be able to extract the blade (1) formed, removing it from the installation of assembly.

## Claims

1. An installation for assembling composite material structures, for assembling component parts of wind turbine or aerodyne blades (1), wherein the blade (1) comprises an upper surface sheet (1.1) and a lower surface sheet (1.2), both sheets (1.1 and 1.2) being arranged on an inner structure formed by beams (1.4) such that said sheets (1.1 and 1.2) determine the aerodynamic profile of the blade, together with a complementary section defining a leading edge (1.3), **characterized in that** the installation comprises positioning tools (2, 3, 4, 5) for handling and assembling the different component parts of the blade (1), and transporting tools (6, 7, 8, 9) which together with reference means (10) allow placing with precision the different component parts of the blade (1) in the installation, wherein the positioning tools (2, 3, 4, 5) and the transporting tools (6, 7, 8, 9) are:
- a positioning tool (2) for positioning the upper surface sheet (1.1),
- a positioning tool (3) for positioning the lower surface sheet (1.2),
- a positioning tool (4) for positioning the leading edge (1.3),
- a positioning tool (5) for positioning the beams (1.4),
- a transporting tool (6) for transporting the upper surface sheet (1.1),
- a transporting tool (7) for transporting the lower surface sheet (1.2),
- a transporting tool (8) for transporting the leading edge (1.3),
- a transporting tool (9) for transporting the beams (1.4).

2. The installation for assembling composite material structures according to claim 1, **characterized in that** the positioning tools (2,3) for positioning the sheets (1.1, 1.2) are made up of turrets (2.1, 3.1) susceptible to transversal displacement to receive and position the sheets (1.1, 1.2) which are carried by the transporting tools (6, 7) for the assembly thereof.

3. The installation for assembling composite material structures according to the preceding claim, **characterized in that** the turrets (2.1, 3.1) are drivable by means of a nut-screw mechanism (2.2, 3.2) and slidable by means of respective skids (2.3, 3.3), there being coupled to said turrets (2.1, 3.1) curved elements (2.4, 3.4) reproducing the shape of the corresponding sheet (1.1, 1.2) to be handled and having respective retention means (2.5, 3.5) to secure said sheets (1.1, 1.2).

4. The installation for assembling composite material structures according to claim 1, **characterized in that** the positioning tool (4) has a mechanism (4.1) susceptible to vertical displacement to receive and position the leading edge (1.3) to be carried by the transporting tool (8) for the assembly thereof.

5. The installation for assembling composite material structures according to the preceding claim, **characterized in that** coupled to the mechanism (4.1) of the positioning tool (4) there is arranged a curved element (4.2) with the shape of the leading edge (1.3) to be handled, said curved element (4.2) being provided with retention means (4.3) to secure the leading edge (1.3).

6. The installation for assembling composite material structures according to claim 1, **characterized in that** the positioning tool (5) for positioning the beams (1.4) has rotating articulated arms which are assembled in the positioning tool (4) for the leading edge (1.3) and which at the ends thereof there are arranged retention means to secure the beams (1.4).

7. The installation for assembling composite material structures according to claim 1, **characterized in that** the transporting tools (6, 7, 8, 9) are truss and light structures having anchoring means (11) for stabilizing them in retention with respect to the reference means (10) and retention means (12) to secure the different component parts of the blade (1) to be assembled.

8. The installation for assembling composite material structures according to the preceding claims, **characterized in that** the respective retention means which the positioning tools (2, 3, 4, 5) and the transporting tools (6, 7, 8, 9) have for securing the component parts of the blade (1) to be assembled, consist of suction systems, clamping systems or combination of both.

9. The installation for assembling composite material structures according to claim 1, **characterized in that** the reference means (10) are susceptible to being conceal towards a retracted position wherein they do not interfere during the assembly of the component parts of the blade (1) to be formed.
